# EUROPEAN PATENT APPLICATION

(11) **EP 3 536 755 A1**
(43) Date of publication of application: **11.09.2019**
(21) Application number: 18461532.6
(22) Date of filing: 09.03.2018
(51) Int. Cl.: C09J 11/04, C09J 9/00, C09J 163/00, C08K 3/08

(54) **A THERMALLY CONDUCTIVE ADHESIVE AGENT AND A METHOD FOR MANUFACTURING THEREOF**

(71) Applicant: Przedsiebiorstwo "Amepox" sp. z o.o., 90-268 Lodz (PL)
(72) Inventor: Moscicki, Andrzej, 91-503 Lodz (PL)
(74) Representative: Kancelaria Eupatent.pl Sp. z.o.o

(57) **Abstract**

A thermally conductive adhesive agent comprising: at least 85% of a silver filler; at most 15% of an epoxy resin composition; wherein the silver filler comprises silver nanoparticles having an average diameter from 3 to 100 nm and silver flakes having an average size from 2 to 10 micrometers, wherein the weight ratio of the silver nanoparticles to the silver flakes is from 1:2 to 2:1.

## Description

### FIELD OF THE INVENTION

The present invention relates to a thermally conductive adhesive agent, useful in particular as a thermal interface material (TIM).

### BACKGROUND

A thermal interface material (TIM) is a material that is inserted between two parts in order to enhance the thermal coupling between them. Typically, TIMs are used to couple a heat producing device (a heat source) with a heat dissipation device (a heat sink). Typical TIM types include thermal grease, thermal glue, thermal gap filler, thermal pad or a thermal adhesive.

In many applications, a TIM is required to have both high thermal conductivity and high adhesive properties, in order to hold together the two coupled components. Typical TIMs are based on organic adhesives with inorganic fillers (mostly silver powder or flakes), due to high thermal conduction of silver, i.e. over 420 W/mK. These compositions are usually thermally hardened or sintered. However, the organic components significantly limit the thermal conduction parameters. The thermal conduction coefficient values for typical TIMs are from 3 to 15 W/mK.

Typical application for TIM material is interface between semiconductor chips (or other active elements) which generate heating, and radiators for removing heat flow outside of electronics circuits or electronics devices (see example of the picture below).

A US patent US7262511 discloses an electrically conductive adhesive agent that comprises, as major constituent parts, a metal component as a conductive medium and a thermosetting resin as an adhesive component. The conductive adhesive agent contains, as essential components thereof: a metal powder (A) made of at least one metal material selected from the group consisting of silver, copper, gold, platinum, nickel, zinc, bismuth and tungsten, and having an average particle size selected to be in the range of 0.5 to 30 µm ; ultrafine particles (B) that are composed of ultrafine metal particles with an average particle size selected to be in the range of 1 to 20 nm made of at least one metal material selected from the group consisting of silver, copper, gold, platinum, nickel, zinc and bismuth, and a covering layer of an organic compound being formed on the metal surface thereof; a thermosetting resin (C); and a solvent (D). The ratio of blended amounts of said essential components in the conductive adhesive agent is such that provided that the blended amount A of said metal powder is 100 parts by weight, the blended amount B of said ultrafine particles is selected to be in the range of 1 to 10 parts by weight, the blended amount C of said thermosetting resin is selected to be in the range of 5 to 15 parts by weight, and the blended amount D of said solvent is selected to be 10 parts or less by weight wherein a mixture of spherical metal powder (A-1) and a flaky metal powder (A-2) is used as said metal powder (A), and the mixing ratio of the spherical metal powder (A-1) is selected to be in the range of 99:1 to 50:50 as a weight ratio. The ultrafine, nano-sized particles are coated by paraffin, therefore high temperature (above 200°C) is necessary to remove the paraffin when preparing the product.

There is a need to further improve the compositions and methods for manufacturing conducting adhesive agents, in order to further improve their thermal conductivity and adhesive properties.

### SUMMARY

There is disclosed a thermally conductive adhesive agent comprising: at least 85% of a silver filler; at most 15% of an epoxy resin composition; wherein the silver filler comprises silver nanoparticles having an average diameter from 3 to 100 nm and silver flakes having an average size from 2 to 10 micrometers, wherein the weight ratio of the silver nanoparticles to the silver flakes is from 1:2 to 2:1.

The silver nanoparticles may have an average diameter from 50 to 100 nm.

The silver nanoparticles may have an average diameter from 3 to 10 nm.

The silver nanoparticles may be coated by a material having a melting temperature below 150°C, preferably by a polymer, amino or carboxylate coating.

There is also disclosed a method for manufacturing a thermally conductive adhesive agent, comprising mixing at least 85% of a silver filler with at most 15% of an epoxy resin composition; wherein the silver filler comprises silver nanoparticles having an average diameter from 3 to 100 nm and silver flakes having an average size from 2 to 10 micrometers, wherein the weight ratio of the silver nanoparticles to the silver flakes is from 1:2 to 2:1.

The method may comprise mixing silver nanoparticles with a solvent; homogenizing the mixture; adding silver flakes to the mixture; homogenizing the mixture; adding the epoxy resin composition to the mixture; and decantinating the mixture to separate the excess solvent.

The method may comprise providing a silver nanoparticles colloid; evaporating a majority of a solvent from the colloid; adding silver flakes to the colloid after evaporation; homogenizing the mixture; adding the epoxy resin composition to the mixture; and decantinating the mixture to separate the excess solvent.

The solvent can be an alcohol.

### BRIEF DESCRIPTION OF THE DRAWINGS

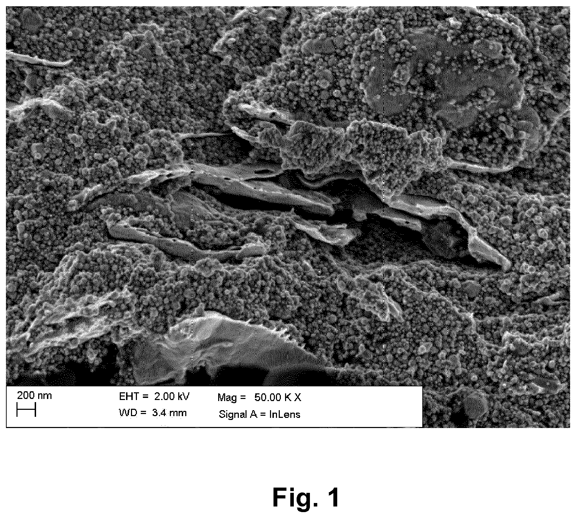

The present invention is shown by means of example embodiments on a drawing, wherein Fig. 1 shows a structure of the thermally conductive adhesive agent obtainable by the process described herein.

### DETAILED DESCRIPTION

The inventors of the present invention realized that by incorporating, within the thermally conductive adhesive agent, high amount of nano-sized particles, improved properties are obtained with respect to known products, as described herein in the background section, in particular with respect to thermal conduction parameters.

The incorporation of a high amount of nano-silver particles can be made by one of the following embodiments.

The thermally conductive adhesive agent as described herein is particularly useful as a connecting medium between active electronic devices, such as microprocessors, diodes, transistors, LEDs, etc. and heat sinks, such as radiators.

In general, the thermally conductive adhesive agent comprises at least 85% of a silver filler and at most 15% of an epoxy resin composition.

The silver filler comprises silver nanoparticles having an average diameter from 3 to 100 nm, and silver flakes having an average size from 2 to 10 micrometers, wherein the weight ratio of the silver nanoparticles to the silver flakes is from 1:2 to 2:1. Preferably, the above-mentioned silver nanoparticles and silver flakes constitute at least 75% by weight of the silver filler, more preferably at least 80%, 85%, 90%, 95%, 96%, 97%, 98%, 99%, 99,5%, 99,9%, wherein the remaining content of the silver filler is constituted by elements of other sizes. For example, the remaining content may be constituted by silver wires, with a diameter from 50 nm to 150 nm and a length from 100 nm to 1000 nm. Other shapes and sizes of additional elements are possible as well. In another embodiment, the silver filler consists only of the above-mentioned silver nanoparticles and silver flakes.

The silver nanoparticles have preferably a size from 3 to 70 nm, or from 3 to 8 nm, or from 50 to 70 nm. The silver nanoparticles can be coated with a protective layer, for example with a polymer, amino or carboxylate layer. The coating layer material shall have a relatively low melting temperature, preferably below 150°C. After the adhesive is applied, it shall be heated to a temperature higher than the melting temperature of the protective layer, in order to remove the protective layer and allow direct contact with silver nanoparticles. Use of low melting temperature protective layer allows to use the adhesive on temperature-sensitive substrates, such as flexible foils used for flexible circuits.

The silver flakes have an average particle size from 2 to 10 micrometers, preferably from 2 to 4 micrometers or from 6 to 10 micrometers (as measured by the Coulter measurement method).

The epoxy resin composition can be based on a Bisfenol A or cycloaliphatic resin. The resin is mixed with corresponding additives, such as a hardener (e.g. an amino or an anhydrite hardener), solvent (e.g. butyl-glycidyl ether or 2-butanon), adhesive (e.g. silan), dispergant (e.g. Byk-301 or Byk-325) and/or a stabilizer (e.g. PVP or PVA or citric acid), wherein the additives are selected and added according to the resin specification.

The inventors have realized that the particular ratio of the silver nanoparticles and silver flakes is particularly suitable for application of the mixture as a thermally conductive adhesive agent, where it is important to provide both: high thermal conductivity and high adhesive strength. The high thermal conductivity is achieved due to high amount of the silver filler. The high adhesive strength is achieved due to the particular composition of the silver filler, i.e. a combination of nanoparticles and micro-sized flakes, which allows to achieve compact structure of the composition. A higher amount of micro-sized flakes than proposed herein would decrease the thermal conductivity properties. On the other hand, a higher amount of nanoparticles would create too high surface area of the silver filler and would not allow the small amount of resin to penetrate effectively between the particles of the filler, which would decrease the adhesive strength. In the proposed composition, there is an optimal ratio between the nanoparticles and the micro-sized flakes, which results in that the free space between the flakes is filled both by the nanoparticles and the resin, therefore both high thermal conductivity and adhesive strength are achieved.

The composition of the material as presented herein is also particularly useful in applications, where the material is pressed during the sintering process, to obtain a small thickness of the adhesive/conductive layer, for example such as 10 micrometers.

### First method - powder as a source product

The method starts by mixing a silver nanoparticles with a solvent and homogenizing the mixture, for example using a mechanical mixer to obtain good dispersion of the powder within the solvent. The mixing is performed preferably in a closed vessel in order to avoid evaporation of the solvent during mixing. Next, silver flakes are added to the mixture and the mixture is further homogenized by mixing, preferably in a closed vessel in order to avoid evaporation of the solvent during mixing. Then, an epoxy resin composition is added and the mixture is homogenized. The mixture is then left in the closed vessel to allow the solid fillers to fall towards the bottom of the vessel. Next, the mixture is subject to decantination to separate the excess solvent from the composition.

Preferably, the solvent is an alcohol, such as a ethanol.

### First example of the method

47,5 g of silver nanoparticles with an average particle diameter of 50 nm (NANOSILVER AS 50, available from Amepox Microelectronics, Poland) was mixed with 20 ml of ethanol for 2 hours, in a room temperature, in a closed vessel. Next, 47,5 g of silver flakes with an average particle size from 2 to 4 micrometers (SILVER FLAKE AX 20LC available from Amepox Microelectronics, Poland) were added to the mixture and the mixture was mixed for another 2 hours, in a room temperature, in the closed vessel. Next, 5g of Bisfenol A epoxy resin was added and the mixture was mixed for 30 minutes, in a room temperature, in the closed vessel. The mixture was then left for two hours in the closed vessel to allow the solid fillers to fall towards the bottom of the vessel and next it was subject to decantination to separate the excess ethanol.

### Second method - silver nanoparticles colloid as a source product

The source product is a silver nanoparticles colloid, i.e. a dispersion of silver nanoparticles in a solvent.

The method starts with evaporation of a majority (e.g. 90%) of the solvent from the colloid. The evaporation process is performed using a vacuum evaporator. Next, silver flakes are added to the mixture and the mixture is further homogenized by mixing, preferably in a closed vessel in order to avoid evaporation of the solvent during mixing. Then, an epoxy resin composition is added and the mixture is homogenized. The mixture is then left in the closed vessel to allow the solid fillers to fall towards the bottom of the vessel. Next, the mixture is subject to decantination to separate the excess solvent from the composition.

The solvent is preferably an alcohol, such as isopropanol or propan-2-ol.

### Second example of the method

4750g of silver nanoparticles colloid was used as a source product: Nanosilver IP 1% available from Amepox Microelectronics (Poland). It is a dispersion of silver nanoparticles (of average size 50-60 nm, in a polymer coating) in isopropanol (as a solvent). The colloid was subject to an evaporation process to remove most of the solvent. After three hours of the evaporation process, 475g of colloid containing 47,5g silver nanoparticles was obtained. Next, 47,5 g of silver flakes with an average particle size from 2 to 4 micrometers (SILVER FLAKE AX 20LC available from Amepox Microelectronics, Poland) were added to the mixture and the mixture was mixed for further 2 hours, in a room temperature, in a the closed vessel. Next, 5g of epoxy composition (4,07g of epoxy resin - Epidian 601 and 0,93g of amino hardener - HY 956) was added and the mixture was mixed for 30 minutes, in a room temperature, in the closed vessel. The mixture was then left for two hours in the closed vessel to allow the solid fillers to fall towards the bottom of the vessel and next it was subject to decantination to separate the excess solvent.

### Product examples

### First example of the product

The thermally conductive adhesive agent comprises 47,5% of silver nanoparticles with average particle diameter of 20 nm, 47,5% silver flakes with an average size particle size of 3 micrometers and 5% of epoxy resin composition. The thermal conductivity coefficient of that product is above 78 W/mK. The adhesive strength is 7,5 MPa.

### Second example of the product

The thermally conductive adhesive agent comprises 45% of silver nanoparticles with average particle diameter of 80 nm, 45% silver flakes with an average size particle size of 6 micrometers and 10% of epoxy resin composition. The thermal conductivity coefficient of that product is above 30 W/mK. The adhesive strength is 8,2 MPa.

### Third example of the product

The thermally conductive adhesive agent comprises 42,5% of silver nanoparticles with average particle diameter of 60 nm, 42,5% silver flakes with an average size particle size of 9 micrometers and 15% of epoxy resin composition. The thermal conductivity coefficient of that product is above 22 W/mK. The adhesive strength is 9,8 MPa.

## Claims

1. A thermally conductive adhesive agent comprising:
- at least 85% of a silver filler;
- at most 15% of an epoxy resin composition;
- wherein the silver filler comprises silver nanoparticles having an average diameter from 3 to 100 nm and silver flakes having an average size from 2 to 10 micrometers, wherein the weight ratio of the silver nanoparticles to the silver flakes is from 1:2 to 2:1.

2. The thermally conductive adhesive agent according to claim 1, wherein the silver nanoparticles have an average diameter from 50 to 100 nm.

3. The thermally conductive adhesive agent according to claim 1, wherein the silver nanoparticles have an average diameter from 3 to 10 nm.

4. The thermally conductive adhesive agent according to any of previous claims, wherein the silver nanoparticles are coated by a material having a melting temperature below 150°C, preferably by a polymer, amino or carboxylate coating.

5. A method for manufacturing a thermally conductive adhesive agent, comprising mixing at least 85% of a silver filler with at most 15% of an epoxy resin composition; wherein the silver filler comprises silver nanoparticles having an average diameter from 3 to 100 nm and silver flakes having an average size from 2 to 10 micrometers, wherein the weight ratio of the silver nanoparticles to the silver flakes is from 1:2 to 2:1.

6. The method according to claim 5, comprising:
- mixing silver nanoparticles with a solvent;
- homogenizing the mixture;
- adding silver flakes to the mixture;
- homogenizing the mixture;
- adding the epoxy resin composition to the mixture; and
- decantinating the mixture to separate the excess solvent.

7. The method according to claim 5, comprising:
- providing a silver nanoparticles colloid;
- evaporating a majority of a solvent from the colloid;
- adding silver flakes to the colloid after evaporation;
- homogenizing the mixture;
- adding the epoxy resin composition to the mixture; and
- decantinating the mixture to separate the excess solvent.

8. The method according to any of claims 6 or 7, wherein the solvent is an alcohol.
